# EUROPEAN PATENT APPLICATION

(11) **EP 4 640 337 A1**
(43) Date of publication of application: **29.10.2025**
(21) Application number: 25164203.9
(22) Date of filing: 17.03.2025
(51) Int. Cl.: B21J 5/00, C21D 8/00, G01N 23/20, B23P 15/00, C22F 1/00, G04B 19/12, G04D 3/00, C21D 6/00, G04B 37/22

(54) **WATCH PART MANUFACTURING METHOD AND WATCH PART**

(30) Priority: 19.03.2024 JP 2024043236
(71) Applicant: Seiko Epson Corporation, Tokyo 160-8801 (JP)
(72) Inventor: TAKASAWA, Koki, Suwa-shi, 392-8502 (JP); NAKABAYASHI, Yusuke, Suwa-shi, 392-8502 (JP); MARUMO, Tetsuro, Suwa-shi, 392-8502 (JP); HONNA, Takeshi, Suwa-shi, 392-8502 (JP); SATO, Hiroki, Suwa-shi, 392-8502 (JP); SAKODA, Seisho, Suwa-shi, 392-8502 (JP)
(74) Representative: Lewis Silkin LLP

(57) **Abstract**

A watch part manufacturing method includes: preparing a metal raw material; manufacturing a watch part material including a processing target portion to be cut by performing forging and heat treatment on the metal raw material; and cutting out a watch part from the processing target portion of the watch part material by cutting, and polishing the watch part, in which in the forging, the metal raw material is shaped using a die designed such that a magnitude of distortion of the processing target portion in the watch part material falls within a predetermined range, and the heat treatment is performed under a heat treatment condition set according to the magnitude of the distortion of the processing target portion in the watch part material shaped by the forging to make a crystal grain size of the processing target portion uniform and to make a crystal orientation isotropic.

## Description

The present application is based on, and claims priority from JP Application Serial Number 2024-043236, filed March 19, 2024, the disclosure of which is hereby incorporated by reference herein in its entirety.

### BACKGROUND

### 1. Technical Field

The present disclosure relates to a watch part manufacturing method, a watch part material manufacturing method, a watch part, and a watch part material.

### 2. Related Art

JP-A-2006-70331 discloses, as a method for manufacturing a watch part such as a watch case, a method for manufacturing a watch case, in which an ingot containing Fe as a main component is forged into a substantially cylindrical metal composition and is subjected to machining (rough processing) such as cutting, grinding, and polishing after being subjected to solution treatment to form a shape corresponding to the watch case, and then, an aging treatment is performed, followed by finishing processing of forming a mirror surface portion, a satin portion, and a hairline portion in a predetermined pattern by buff polishing, satin finishing, and hairline processing.

However, the manufacturing method according to the related art has limitations in improving a mirror finishing quality of the watch part. For example, in a case of manufacturing the watch part from the cylindrical metal composition by cutting or the like as in JP-A-2006-70331, a directional characteristic arises in a crystal grain shape, and a crystal orientation is anisotropic when processing the ingot into the cylindrical metal composition by rolling, forging, drawing, or the like. Therefore, the crystal orientation is anisotropic also in the watch part manufactured by cutting or the like from the cylindrical metal composition. There is also a method of plastically forming the metal composition into a case shape by forging, but in this case, a processing rate partially changes, a crystal grain size becomes non-uniform, and the crystal orientation also is anisotropic. Since polishing for mirror finishing is affected by a metallographic structure, when the polishing is performed in a state in which the crystal grain size is non-uniform or the crystal orientation is anisotropic, a surface of the watch part cannot be uniformly polished, and there is a limitation in the mirror finishing quality. Therefore, it was not possible to meet a demand for further improving the mirror finishing quality of the watch part and providing a watch with a higher sense of luxury.

### SUMMARY

According to an aspect of the present disclosure, a watch part manufacturing method includes: preparing a metal raw material; manufacturing a watch part material including a processing target portion to be cut by performing forging and heat treatment on the metal raw material; and cutting out a watch part from the processing target portion of the watch part material by cutting, and polishing the watch part, in which in the forging, the metal raw material is shaped using a die designed such that a magnitude of distortion of the processing target portion in the watch part material falls within a predetermined range, and the heat treatment is performed under a heat treatment condition set according to the magnitude of the distortion of the processing target portion in the watch part material shaped by the forging to make a crystal grain size of the processing target portion uniform and to make a crystal orientation isotropic.

According to an aspect of the present disclosure, a watch part material manufacturing method for manufacturing a watch part material which is a target object to be cut to manufacture a watch part includes: preparing a metal raw material; and manufacturing the watch part material including a processing target portion to be cut by performing forging and heat treatment on the metal raw material, in which in the forging, the metal raw material is shaped using a die designed such that a magnitude of distortion of the processing target portion in the watch part material falls within a predetermined range, and the heat treatment is performed under a heat treatment condition set according to the magnitude of the distortion of the processing target portion in the watch part material shaped by the forging to make a crystal grain size of the processing target portion uniform and to make a crystal orientation isotropic.

According to an aspect of the present disclosure, a watch part is manufactured by performing forging and heat treatment on a metal raw material to manufacture a watch part material including a processing target portion to be cut, and then cutting out the watch part from the processing target portion by cutting and polishing the watch part, in which a crystal grain size of the watch part is made uniform and a crystal orientation is made isotropic.

According to an aspect of the present disclosure, a watch part material is a target object to be cut to manufacture a watch part, in which the watch part material is manufactured by performing forging and heat treatment on a metal raw material and includes a processing target portion to be cut, and a crystal grain size of the processing target portion is made uniform and a crystal orientation is made isotropic.

### BRIEF DESCRIPTION OF THE DRAWINGS

FIG. 1 is a perspective view illustrating a watch part according to an embodiment.
FIG. 2 is a flowchart illustrating a manufacturing process for the watch part according to the embodiment.
FIG. 3 is a schematic view for describing the manufacturing process for the watch part according to the embodiment.
FIG. 4 is a view for describing a forging step according to the embodiment.
FIG. 5 is a view for describing a cutting step according to the embodiment.
FIG. 6 is a view for describing the cutting step according to the embodiment.
FIG. 7 is a view for describing the cutting step according to the embodiment.
FIG. 8A is a graph illustrating a quantity for each crystal grain size in an example.
FIG. 8B is a graph illustrating a quantity for each crystal grain size in a comparative example.
FIG. 9A is a graph illustrating a relationship between a diffraction angle and a diffracted X-ray intensity in the example.
FIG. 9B is a graph illustrating a relationship between a diffraction angle and a diffracted X-ray intensity in the comparative example.
FIG. 10 is a diagram illustrating evaluation results of the example and the comparative example.

### DESCRIPTION OF EMBODIMENTS

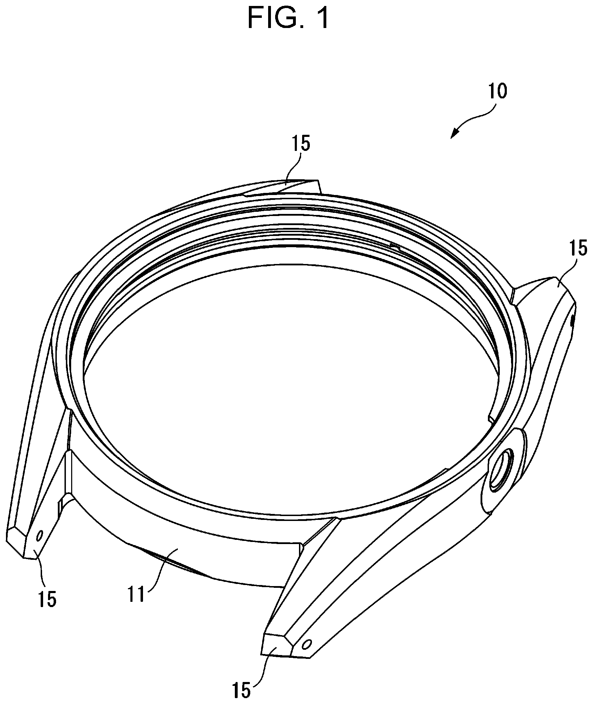

FIG. 1 is a perspective view illustrating a watch case 10, which is an example of a watch part. The watch case 10 includes a case body 11 and cans 15. The case body 11 is a cylindrical member made of metal, and, for example, a dial and a movement (not illustrated) are disposed inside the case body 11. The cans 15 are portions to which bands are attached, and are provided at a 6 o'clock position and a 12 o'clock position on the case body 11. The cans 15 are provided as a pair protruding from a side surface of the case body 11.

### Manufacturing of Watch Case

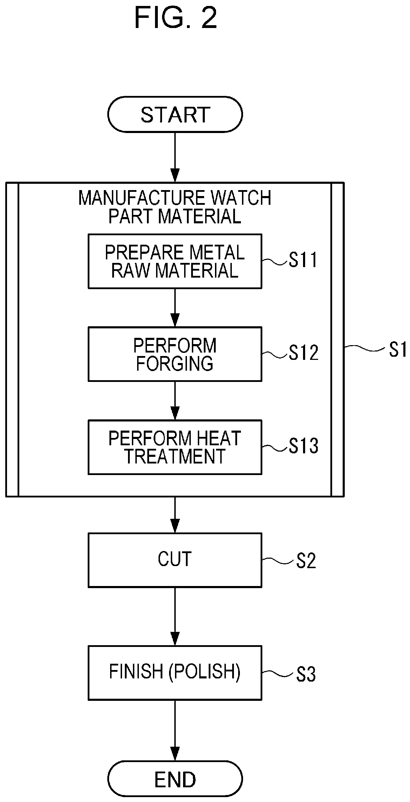

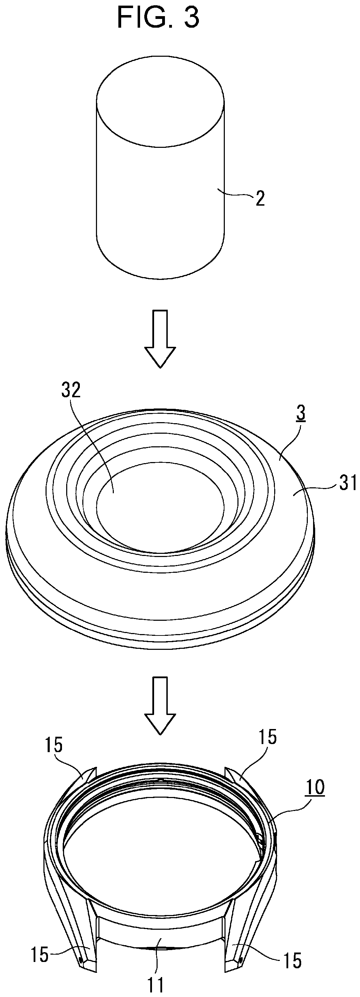

FIG. 2 is a flowchart illustrating a manufacturing process for the watch case 10, and FIG. 3 is a view illustrating an outline of the manufacturing process. The manufacturing process for the watch case 10 includes a step S1 of manufacturing a watch part material 3, a cutting step S2 of cutting out the watch case 10 from a processing target portion 31 of the manufactured watch part material 3, and a finishing step S3 of performing finishing work including polishing on the cut watch case 10. The step S1 of manufacturing the watch part material 3 includes a step S11 of preparing a metal raw material 2, a forging step S12 of forging the metal raw material 2, and a heat treatment step S13 of performing heat treatment on a shaped article shaped by the forging.

### Manufacturing of Watch Part Material

In the step S1 of manufacturing the watch part material 3, first, the step S11 of preparing the metal raw material 2 manufactured from a metal base material such as stainless steel, titanium, a platinum alloy, or a gold alloy, which is a raw material for the watch case 10, is performed. In the present embodiment, a cylindrical material of stainless steel is prepared as the metal raw material 2 as illustrated in FIG. 3. Such a metal raw material 2 can be manufactured by processing raw materials such as iron, chromium, and nickel through processes such as melting, refining, continuous casting, and various types of rolling, or the metal raw material 2 can be prepared by purchasing a round bar distributed in a market and cutting the round bar to a predetermined length, for example.

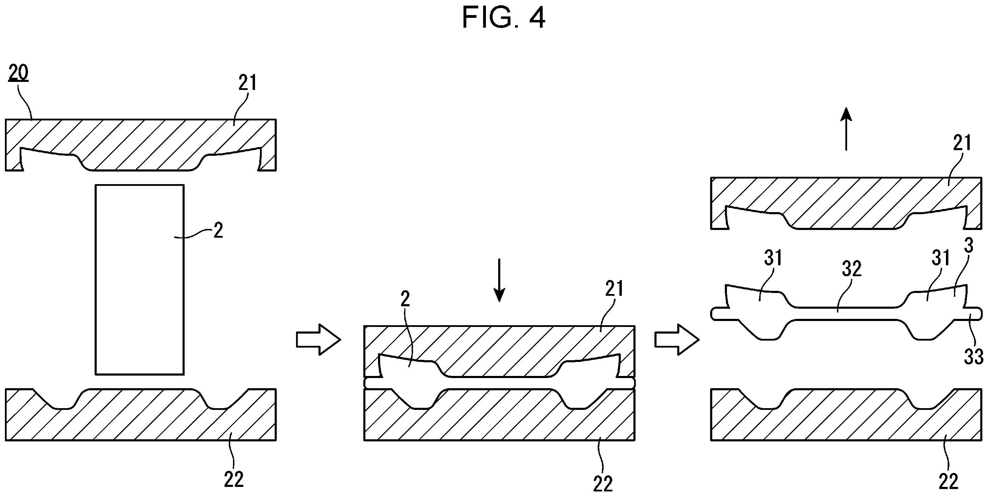

Next, the forging step S12 of forging the metal raw material 2 will be described with reference to FIG. 4. In the present embodiment, hot forging is used as the forging, but cold forging may also be used. In the forging step S12, the metal raw material 2 is heated and put in a die 20 including an upper die 21 and a lower die 22 in order to perform the hot forging. Next, the upper die 21 is brought close to the lower die 22 by a press machine to crush and shape the metal raw material 2. Then, when the upper die 21 is separated from the lower die 22, the watch part material 3 is plastically formed and manufactured by the forging. The watch part material 3 is a substantially disk-shaped part including the processing target portion 31 and a removal portion 32.

The die 20 used in the forging is designed such that a magnitude of distortion of the processing target portion 31 in the watch part material 3 falls within a predetermined range, and the metal raw material is shaped using the die 20. In other words, the die 20 is designed such that the magnitude of the distortion of the processing target portion 31 in the watch part material 3 falls within the same range, that is, within the predetermined range, in consideration of deformation of the metal raw material 2 during the hot forging. It is sufficient if the predetermined range of the magnitude of the distortion of the processing target portion 31 in the watch part material 3 is a range in which the distortion can disappear, the crystal grain size can become uniform, and a crystal orientation can become isotropic by the heat treatment step S13 described below. For example, it is sufficient if the magnitude of the distortion of the processing target portion 31 is within 20% of an average value thereof. Therefore, the distortion of each part of the processing target portion 31 is set to fall within a range of 0.024 to 0.036 when the average value of the distortion of the processing target portion 31 is 0.03. In addition, since the removal portion 32 is removed during the cutting described below, there is no need to consider the magnitude or variation of the distortion. Therefore, a portion of the die 20 that shapes the removal portion 32 is designed to reduce a forging resistance and prevent a forging defect, so that quality of the plastic formation using the forging can be improved. In addition, the die 20 including the upper die 21 and the lower die 22 is designed such that the excess material comes out in a lateral direction as burrs 33 from an outer peripheral portion of the processing target portion 31, and is also designed such that the magnitude of the distortion of the processing target portion 31 is the same in this respect. Therefore, the die 20 is a semi-closed die.

As illustrated in FIGS. 3 and 4, the removal portion 32 is a disk-shaped portion having a small thickness, and the processing target portion 31 is an annular portion along an outer periphery of the removal portion 32. For this reason, the processing target portion 31 is less deformed and therefore less distorted, while the removal portion 32 is more deformed than the processing target portion 31 and therefore is more distorted.

In the heat treatment step S13, heat treatment is performed under a predetermined heat treatment condition on the watch part material 3 shaped in the forging step S12, thereby removing the distortion of the processing target portion 31 and causing recrystallization, thereby achieving the uniform crystal grain size and the isotropic crystal orientation for the metallographic structure of the processing target portion 31. The uniform crystal grain size means that a standard deviation of the crystal grain size is equal to or less than a predetermined value. For example, in a case where most (for example, 95% or more) of the crystal grain sizes of the metallographic structure of the processing target portion 31 is in a range of 10 to 500 µm, when the standard deviation of the crystal grain size is 50 µm or less, a histogram illustrating a frequency of each crystal grain size has a single peak, and it can be said that the crystal grain size is uniform, and when the standard deviation is 30 µm or less, it can be said that the crystal grain size is more uniform. On the other hand, when the crystal grain size is not uniform and divided into a relatively small size and a large size, the histogram illustrating the frequency of each crystal grain size also has a split peak with two peaks, and the standard deviation is also larger than 50 µm. Therefore, it is possible to determine whether or not the crystal grain size is uniform by measuring the crystal grain size and obtaining the standard deviation. The isotropic crystal orientation means that the crystal orientation is in an orientation state that does not affect mirror-like quality due to the polishing, and means that a relative intensity of a diffracted ray by an X-ray diffraction method is within a range of ±30% or less of a theoretical value. Therefore, it is sufficient if the heat treatment condition is any condition that can implement the above-described uniform crystal grain size and isotropic crystal orientation, and specifically, the heat treatment condition includes a temperature, a time, and a change rate condition of heating during the heat treatment, a temperature and a time of holding, a temperature, a time, and a charge rate condition of cooling, and an atmosphere in each step (a vacuum degree, a gas type, a pressure, or a gas flow rate), and the like. For this reason, the heat treatment condition is set according to the raw material of the watch part material 3 or the like. For example, when the raw material of the watch part material 3 is austenitic stainless steel, a heating temperature is set in a range of 1000°C to 1300°C, and a heating time is set in a range of 1 minute to 180 minutes in the heat treatment. Other conditions are also set according to the raw material of the watch part material 3 or the like. In addition, it is sufficient if the design of the die 20 and the heat treatment condition are adjusted by performing initial setting by simulation or the like, and then experimentally processing and shaping the watch part material 3 and evaluating the watch part material 3. The watch part material 3 is manufactured by the step S1 including the step S11 of preparing the metal raw material 2, the forging step S12, and the heat treatment step S13 described above.

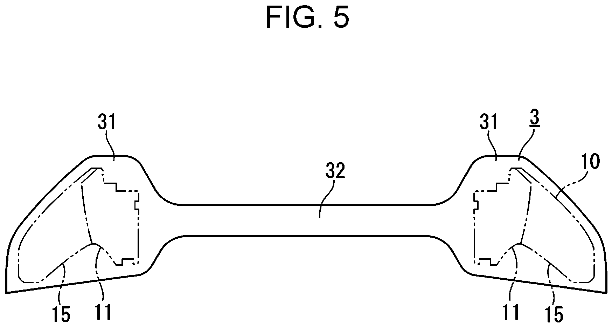

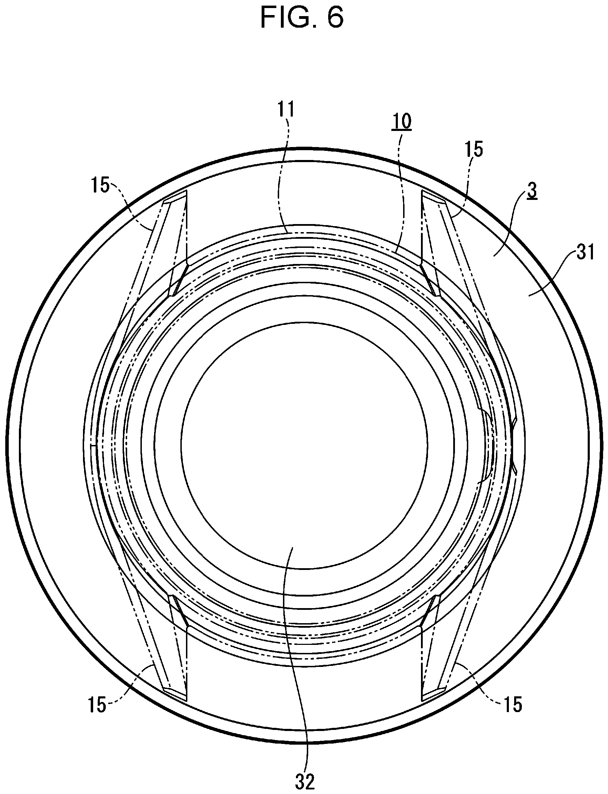

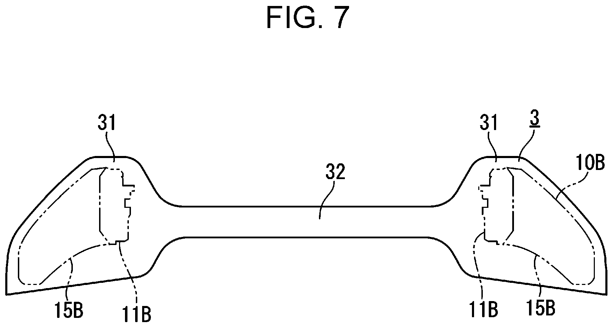

Next, as illustrated in FIG. 2, the cutting step S2 of cutting out the watch case 10, which is the watch part, from the processing target portion 31 of the watch part material 3 by the cutting is performed. That is, as illustrated in FIGS. 5 and 6, the processing target portion 31 of the watch part material 3 is sized and shaped such that the case body 11 and the cans 15 of the watch case 10 can be cut out. Therefore, the watch case 10 can be manufactured by the cutting step S2. The processing target portion 31 of the watch part material 3 is sized and shaped such that a plurality of types of watch cases 10 with different shapes can be cut out. Therefore, as illustrated in FIG. 7, a watch case 10B including a case body 11B and cans 15B having different shapes can be cut out from the common watch part material 3.

Next, the finishing step S3 of, for example, polishing a surface of the watch case 10 cut out in the cutting step S2 is performed. Specifically, the mirror finishing is performed on the surface of the watch case 10 by using a buff motor, an abrasive, or the like. As a result, as illustrated in FIG. 3, the watch part material 3 is manufactured by performing the forging step S12 and the heat treatment step S13 on the metal raw material 2, and the watch case 10 subjected to the mirror finishing is manufactured by performing the cutting step S2 and the finishing step S3 on the watch part material 3.

### Effects of Embodiment

When manufacturing the watch case 10, which is the watch part, the metal raw material 2 prepared in step S11 is shaped into the watch part material 3 in the forging step S12, and the heat treatment is performed in the heat treatment step S13, so that the processing target portion 31 having the uniform crystal grain size and the isotropic crystal orientation can be provided in the watch part material 3. Therefore, the watch case 10 cut out from the processing target portion 31 in the cutting step S2 also has the uniform crystal grain size and the isotropic crystal orientation. Therefore, quality can be improved when the surface of the watch case 10 is polished and subjected to the mirror finishing in the finishing step S3. That is, when the mirror finishing is performed by the polishing, the polishing is affected by the metallographic structure, and a polishing condition cannot be changed for each metallographic structure in the watch case 10. Therefore, when the crystal grain size is non-uniform, there is a limitation in the mirror finishing quality. In addition, since polishability differs for each crystal orientation, there is also a limitation in the mirror finishing quality when the crystal orientation is not aligned within a certain range, that is, when the crystal orientation is anisotropic. On the other hand, in the present embodiment, the crystal grain size of the processing target portion 31 of the watch part material 3 becomes uniform and the crystal orientation becomes isotropic by step S1, and the watch case 10 cut out from the processing target portion 31 by the cutting also has the uniform crystal grain size and the isotropic crystal orientation. Therefore, the mirror finishing quality in the finishing step S3 can be further improved. Therefore, the mirror finishing quality of the watch case 10, which is the watch part, can be further improved to provide a watch with a higher sense of luxury.

### Modified Example

The watch part is not limited to the watch case 10, and it is sufficient if the watch part is any component included in a watch. In particular, the watch part may be a component that allows the watch to be viewed from the outside. Therefore, the watch part may be various ring-shaped components such as a bezel, a dial ring, and a see-through case back. Furthermore, the watch part is not limited to a ring-shaped component, and may be a dial, a case back, a band, a train wheel bridge, a rotor, or the like. In addition, it is sufficient if a shape of the processing target portion 31 of the watch part material 3, that is, a shape of the die 20, is set according to the watch part to be manufactured.

The crystal grain size of the processing target portion 31, that is, the watch part, is not limited to a range in which sizes of all the crystal grains are 10 µm or more and 500 µm or less, and it is sufficient if a certain percentage or more, for example, 95% or more, of the crystal grains have a size of 10 µm or more and 500 µm or less. Since a small crystal grain size improves cuttability, for example, 95% or more of the crystal grains may have a size of 10 µm or more and 50 µm or less. It is sufficient if the crystal orientation of the processing target portion 31, that is, the watch part, does not affect the mirror-like quality, and the relative intensity of the diffracted ray by the X-ray diffraction method is not limited to a range of ±30% or less of the theoretical value.

The metal raw material 2 is not limited to being formed in a cylindrical shape, and it is sufficient if the metal raw material 2 has a shape according to the shape of the watch part to be manufactured. For example, when manufacturing a square watch case or band, a prismatic metal raw material 2 may be used.

### Example

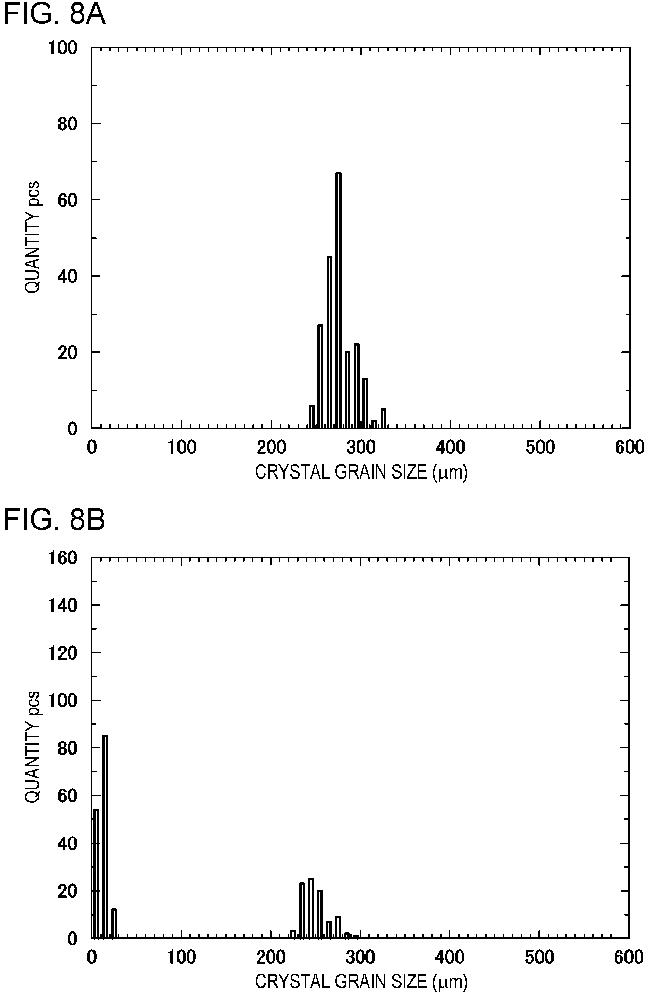

Next, an example and a comparative example of the present disclosure will be described with reference to FIGS. 8A, 8B, 9A, 9B, and 10. The example is a watch case manufactured according to the above embodiment, and the comparative example is the metal raw material 2 plastically formed into the shape of the watch case by the forging. FIGS. 8A and 8B are histograms illustrating a quantity for each crystal grain size obtained by analyzing a metal composition of the watch case. As illustrated in FIG. 8A, in the example, the crystal grain size was almost uniform, and the histogram of the crystal grain size also had a single peak. On the other hand, in the comparative example, the metal raw material 2 was plastically formed into the shape of the watch case 10 by the forging. Therefore, there was variation in the crystal grain size, and the histogram of the crystal grain size also had a split peak. In the example of FIG. 8A, an average value of the crystal grain sizes was 275.3 µm, a median value of the crystal grain sizes was 273.0 µm, and a standard deviation σ of the crystal grain sizes was 16.43 µm. In the comparative example of FIG. 8B, the average value of the crystal grain sizes was 100.9 µm, the median value of the crystal grain sizes was 16.5 µm, and the standard deviation σ of the crystal grain sizes was 116.29 µm.

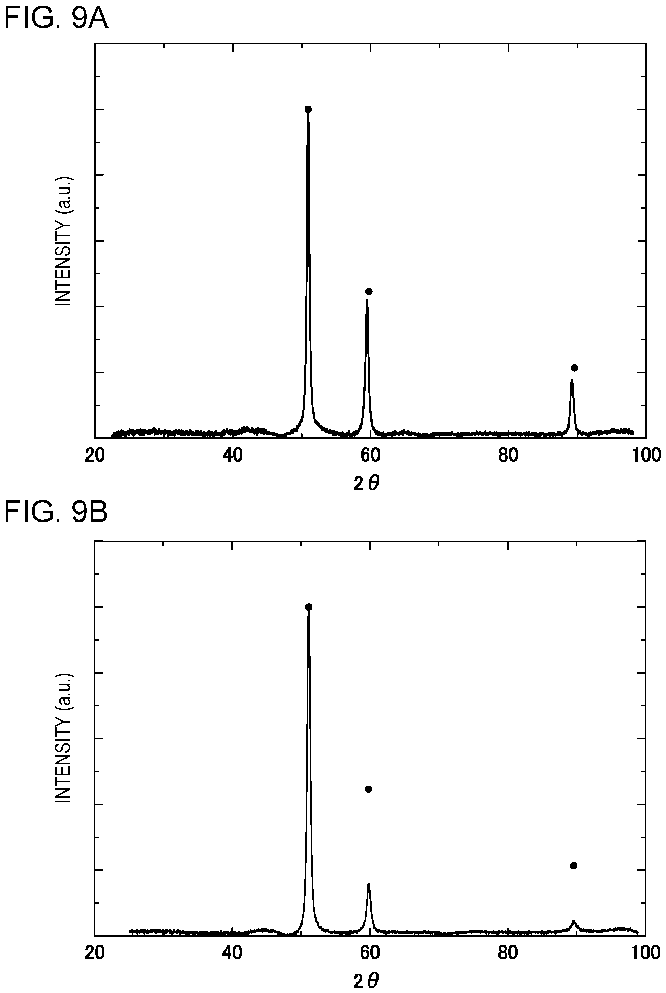

FIGS. 9A and 9B illustrate results of analyzing the crystal orientation of the metal composition of the watch case by the X-ray diffraction method. FIGS. 9A and 9B illustrate the measurement results of the example and the comparative example, and a vertical axis represents the relative intensity based on the highest peak value of the diffracted ray. In each drawing, a black circle indicates the theoretical value. For example, as for the theoretical value for austenitic stainless steel, the highest intensity appeared when 2θ = about 51 degrees, and the highest intensity was defined as 999. Here, the intensity was 446 when 2θ = about 60 degrees, and the intensity was 241 when 2θ = about 90 degrees. In the example illustrated in FIG. 9A, the highest intensity also appeared when 2θ = about 51 degrees, and the highest intensity was defined as 999. Here, the intensity was 421 when 2θ = about 60 degrees, and the intensity was 182 when 2θ = about 90 degrees. Therefore, in the example, the intensity was 421/446 = 0.94 with respect to the theoretical value when 2θ = about 60 degrees, and the intensity was 182/214 = 0.85 with respect to the theoretical value when 2θ = about 90 degrees, the intensities being within the range of ±30% or less of the theoretical value. On the other hand, in the comparative example illustrated in FIG. 9B, the highest intensity appeared when 2θ = about 51 degrees, and the highest intensity was similarly defined as 999. Here, the intensity was 160 when 2θ = about 60 degrees, and the intensity was 44 when 2θ = about 90 degrees. Therefore, in the comparative example, the intensity was 160/446 = 0.36 with respect to the theoretical value when 2θ = about 60 degrees, and the intensity was 44/214 = 0.21 with respect to the theoretical value when 2θ = about 90 degrees, the intensities being outside the range of ±30% or less of the theoretical value. The inventors evaluated the mirror finishing quality by the polishing and found that when the relative intensity of the diffracted ray by the X-ray diffraction method is within the range of ±30% or less of the theoretical value, the crystal orientation does not affect the mirror-like quality, and when the relative intensity is greater than ±30% of the theoretical value, a variation in the crystal orientation affects the mirror-like quality. Therefore, in the present disclosure, the crystal orientation is defined as being isotropic when the relative intensity of the diffracted ray by the X-ray diffraction method is within the range that does not affect the mirror-like quality, that is, when the relative intensity is within the range of ±30% or less of the theoretical value, and the crystal orientation is defined as being anisotropic when the relative intensity of the diffracted ray by the X-ray diffraction method is outside the range. Therefore, as illustrated in FIGS. 9A and 9B, the crystal orientation in the example is isotropic, and the crystal orientation in the comparative example is anisotropic.

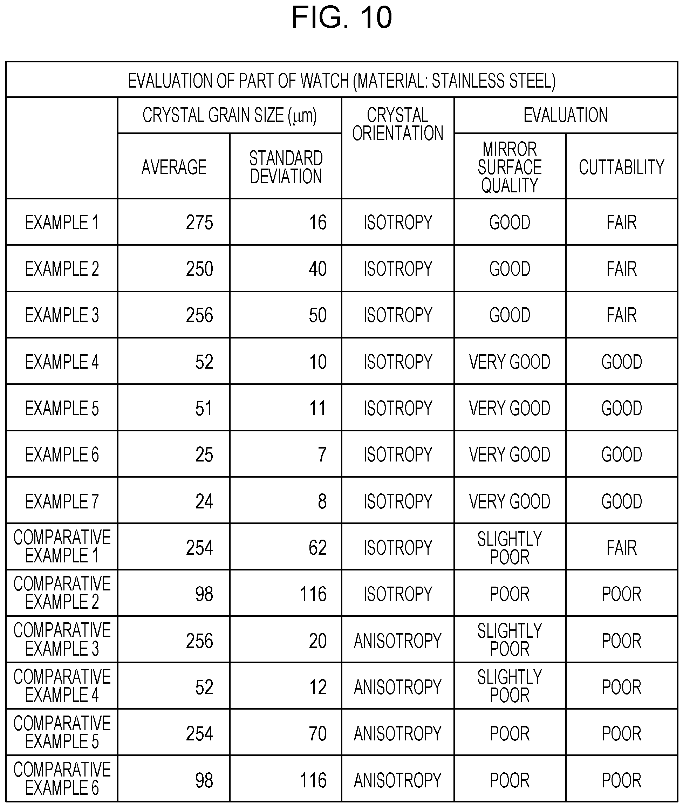

FIG. 10 illustrates evaluation results for the mirror-like quality and the cuttability in examples and comparative examples with different average crystal grain sizes, standard deviations, and crystal orientations in the watch parts made of stainless steel. The mirror-like quality is expressed in four stages: "very good", "good", "slightly poor", and "poor". The mirror-like quality may be evaluated visually by an evaluator or may be evaluated based on measurement results that can evaluate the mirror-like quality such as glossiness. The cuttability is expressed in three stages: "good", "fair", and "poor". It is sufficient if the cuttability is evaluated, for example, based on a processing time, that is, productivity of the watch part. As in Examples 1 to 7, when the standard deviation is as small as 50 µm, a single peak appears in the histogram illustrating the quantity for each crystal grain size as illustrated in FIG. 8A, and the crystal orientation is isotropic as illustrated in FIG. 9A, the mirror-like quality can be improved to "good" or "very good". In particular, when the average value of the crystal grain sizes is as small as 100 µm or less and the standard deviation is as small as 30 µm or less, the crystal grains are small and uniform in size, so that the mirror-like quality can be significantly improved and the cuttability can also be improved. On the other hand, in Comparative Examples 1 to 6, it was found that the standard deviation of the crystal grain sizes was greater than 50 µm or the crystal orientation is anisotropic, and thus, the mirror-like quality was not improved and the cuttability was deteriorated. Therefore, it was confirmed that both of the mirror-like quality and the cuttability can be improved by performing the forging and the heat treatment on the metal raw material 2 to manufacture the watch part material 3 including the processing target portion 31 with the uniform crystal grain size and the isotropic crystal orientation, and by performing finishing processing including the cutting and the polishing on the processing target portion 31 of the watch part material 3 to manufacture the watch part as in the present disclosure. Summary of Present Disclosure

A watch part manufacturing method according to the present disclosure includes: preparing a metal raw material; manufacturing a watch part material including a processing target portion to be cut by performing forging and heat treatment on the metal raw material; and cutting out a watch part from the processing target portion of the watch part material by cutting, and polishing the watch part, in which in the forging, the metal raw material is shaped using a die designed such that a magnitude of distortion of the processing target portion in the watch part material falls within a predetermined range, and the heat treatment is performed under a heat treatment condition set according to the magnitude of the distortion of the processing target portion in the watch part material shaped by the forging to make a crystal grain size of the processing target portion uniform and to make a crystal orientation isotropic. According to the present disclosure, the forging and the heat treatment are performed on the metal raw material to manufacture the watch part material including the processing target portion, and the die for the forging is designed such that the magnitude of the distortion of the processing target portion in the watch part material falls within the predetermined range, so that the processing target portion with little deformation and almost constant distortion within the predetermined range can be formed. As a result, the crystal grain size of the processing target portion can be made uniform and the crystal orientation can be made isotropic by performing the heat treatment under the heat treatment condition set according to the magnitude of the distortion of the processing target portion. Therefore, the watch part cut out from the processing target portion by the cutting can also maintain the uniform crystal grain size and the isotropic crystal orientation. Therefore, the mirror-like quality can be improved when the surface of the watch part is finished by the polishing.

In the watch part manufacturing method according to the present disclosure, the crystal grain size of the processing target portion may be made uniform by the heat treatment such that the crystal grain size of the processing target portion is 10 µm or more and 500 µm or less, and a standard deviation of the crystal grain sizes of the processing target portion is 50 µm or less. According to the present disclosure, the crystal grain size is 10 µm or more and 500 µm or less, and the standard deviation of the crystal grain sizes of the processing target portion is 50 µm or less, and thus, the variation in the crystal grain size can be reduced and the mirror-like quality achieved by the polishing can be improved.

In the watch part manufacturing method according to the present disclosure, the crystal orientation of the processing target portion may be made isotropic by the heat treatment such that a relative intensity of a diffracted ray by an X-ray diffraction method for the processing target portion is ±30% or less of a theoretical value. According to the present disclosure, the crystal orientation is considered to be isotropic when the relative intensity of the diffracted ray by the X-ray diffraction method is ±30% or less of the theoretical value. Therefore, the mirror-like quality achieved by the polishing can be improved without being affected by the variation in the crystal orientation.

In the watch part manufacturing method according to the present disclosure, the forging may be hot forging. According to the present disclosure, since the watch part material is processed by the hot forging, the metal raw material is heated to a high temperature. Therefore, the metal raw material can be easily processed into the watch part material. In addition, although the hot forging causes variation in precision due to shrinkage during cooling, the watch part is cut out by the cutting, and thus, the watch part can be manufactured with high precision.

In the watch part manufacturing method according to the present disclosure, the metal raw material may be formed in a cylindrical shape, the watch part material may have a disk-shaped central portion and an outer peripheral portion formed in an annular shape along an outer periphery of the central portion and having a thickness larger than a thickness of the central portion, and the processing target portion may include the outer peripheral portion. According to the present disclosure, the metal raw material is formed in a cylindrical shape, commercially available steel bars and the like can be used, which results in cost reduction. In addition, since the processing target portion of the watch part material is formed in an annular shape, the ring-shaped watch part such as the case body, the bezel, the see-through case back, or the dial ring of the watch case can be easily manufactured by cutting the processing target portion.

A watch part material manufacturing method for manufacturing a watch part material which is a target object to be cut to manufacture a watch part according to the present disclosure includes: preparing a metal raw material; and manufacturing the watch part material including a processing target portion to be cut by performing forging and heat treatment on the metal raw material, in which in the forging, the metal raw material is shaped using a die designed such that a magnitude of distortion of the processing target portion in the watch part material falls within a predetermined range, and the heat treatment is performed under a heat treatment condition set according to the magnitude of the distortion of the processing target portion in the watch part material shaped by the forging to make a crystal grain size of the processing target portion uniform and to make a crystal orientation isotropic. According to the present disclosure, the forging and the heat treatment are performed on the metal raw material to manufacture the watch part material including the processing target portion, and the die for the forging is designed such that the magnitude of the distortion of the processing target portion in the watch part material falls within the predetermined range, so that the processing target portion with little deformation and almost constant distortion within the predetermined range can be formed. Therefore, the crystal grain size of the processing target portion can be made uniform and the crystal orientation can be made isotropic by performing the heat treatment under the heat treatment condition set according to the magnitude of the distortion of the processing target portion. As a result, the mirror-like quality can be improved when a surface of the watch part cut out from the processing target portion of the watch part material by the cutting is finished by the polishing.

A watch part according to the present disclosure is a watch part manufactured by performing forging and heat treatment on a metal raw material to manufacture a watch part material including a processing target portion to be cut, and then cutting out the watch part from the processing target portion by cutting and polishing the watch part, in which a crystal grain size of the watch part is made uniform and a crystal orientation is made isotropic. In a case of the watch part according to the present disclosure, the forging and the heat treatment are performed on the metal raw material to manufacture the watch part material including the processing target portion, and the crystal grain size of the watch part cut out from the processing target portion by the cutting is made uniform and the crystal orientation is made isotropic, so that the mirror-like quality can be improved when the surface of the watch part is finished by polishing.

In a case of the watch part according to the present disclosure, the crystal grain size of the watch part may be 10 µm or more and 500 µm or less, and a standard deviation of the crystal grain sizes of the watch part may be 50 µm or less. According to the present disclosure, the variation in the crystal grain size can be reduced, and the mirror-like quality achieved by the polishing can be improved.

In the watch part according to the present disclosure, a relative intensity of a diffracted ray by an X-ray diffraction method for the watch part may be ±30% or less of a theoretical value. According to the present disclosure, since the crystal orientation is isotropic, the mirror-like quality achieved by the polishing can be improved without being affected by the variation in the crystal orientation.

In the watch part according to the present disclosure, a raw material of the watch part may be any one of stainless steel, titanium, a platinum alloy, and a gold alloy. According to the present disclosure, the watch part with a high sense of luxury that is particularly suitable for mirror finishing can be manufactured.

In the watch part according to the present disclosure, the watch part may be any one of a case body, a bezel, and a case back of a watch case. According to the present disclosure, the watch part that is visually recognized as an exterior part of a watch can be subjected to mirror finishing, and a watch with a high sense of luxury can be provided.

A watch part material according to the present disclosure is a watch part material which is a target object to be cut to manufacture a watch part, in which the watch part material is manufactured by performing forging and heat treatment on a metal raw material and includes a processing target portion to be cut, and a crystal grain size of the processing target portion is made uniform and a crystal orientation is made isotropic. In a case of the watch part material according to the present disclosure, the crystal grain size of the processing target portion is made uniform, and the crystal orientation is made isotropic, and thus, the mirror-like quality can be improved when a surface of the watch part cut out from the processing target portion of the watch part material by the cutting is finished by the polishing.

In the watch part material according to the present disclosure, the watch part material may have a disk-shaped central portion and an outer peripheral portion formed in an annular shape along an outer periphery of the central portion and having a thickness larger than a thickness of the central portion, and the processing target portion may include the outer peripheral portion. In a case of the watch part material according to the present disclosure, since the processing target portion is formed in an annular shape, the ring-shaped watch part such as the case body, the bezel, the see-through case back, or the dial ring of the watch case can be easily manufactured by cutting the processing target portion.

## Claims

1. A watch part manufacturing method comprising:
preparing a metal raw material;
manufacturing a watch part material including a processing target portion to be cut by performing forging and heat treatment on the metal raw material; and
cutting out a watch part from the processing target portion of the watch part material by cutting, and polishing the watch part, wherein
in the forging, the metal raw material is shaped using a die designed such that a magnitude of distortion of the processing target portion in the watch part material falls within a predetermined range, and
the heat treatment is performed under a heat treatment condition set according to the magnitude of the distortion of the processing target portion in the watch part material shaped by the forging to make a crystal grain size of the processing target portion uniform and to make a crystal orientation isotropic.

2. The watch part manufacturing method according to claim 1, wherein the crystal grain size of the processing target portion is made uniform by the heat treatment such that the crystal grain size of the processing target portion is 10 µm or more and 500 µm or less, and a standard deviation of crystal grain sizes of the processing target portion is 50 µm or less.

3. The watch part manufacturing method according to claim 1, wherein the crystal orientation of the processing target portion is made isotropic by the heat treatment such that a relative intensity of a diffracted ray by an X-ray diffraction method for the processing target portion is ±30% or less of a theoretical value.

4. The watch part manufacturing method according to claim 1, wherein the forging is hot forging.

5. The watch part manufacturing method according to claim 1, wherein
the metal raw material is formed in a cylindrical shape,
the watch part material has a disk-shaped central portion and an outer peripheral portion formed in an annular shape along an outer periphery of the central portion and having a thickness larger than a thickness of the central portion, and
the processing target portion includes the outer peripheral portion.

6. A watch part material manufacturing method for manufacturing a watch part material which is a target object to be cut to manufacture a watch part, the watch part material manufacturing method comprising:
preparing a metal raw material; and
manufacturing the watch part material including a processing target portion to be cut by performing forging and heat treatment on the metal raw material, wherein
in the forging, the metal raw material is shaped using a die designed such that a magnitude of distortion of the processing target portion in the watch part material falls within a predetermined range, and
the heat treatment is performed under a heat treatment condition set according to the magnitude of the distortion of the processing target portion in the watch part material shaped by the forging to make a crystal grain size of the processing target portion uniform and to make a crystal orientation isotropic.

7. A watch part manufactured by performing forging and heat treatment on a metal raw material to manufacture a watch part material including a processing target portion to be cut, and then cutting out the watch part from the processing target portion by cutting and polishing the watch part, wherein a crystal grain size of the watch part is made uniform and a crystal orientation is made isotropic.

8. The watch part according to claim 7, wherein
the crystal grain size of the watch part is 10 µm or more and 500 µm or less, and
a standard deviation of crystal grain sizes of the watch part is 50 µm or less.

9. The watch part according to claim 7, wherein a relative intensity of a diffracted ray by an X-ray diffraction method for the watch part is ±30% or less of a theoretical value.

10. The watch part according to claim 7, wherein a raw material of the watch part is any one of stainless steel, titanium, a platinum alloy, and a gold alloy.

11. The watch part according to claim 7, wherein the watch part is any one of a case body, a bezel, and a case back of a watch case.

12. A watch part material which is a target object to be cut to manufacture a watch part, the watch part material being manufactured by performing forging and heat treatment on a metal raw material, the watch part material comprising
a processing target portion to be cut, wherein
a crystal grain size of the processing target portion is made uniform and a crystal orientation is made isotropic.

13. The watch part material according to claim 12, wherein
the watch part material has a disk-shaped central portion and an outer peripheral portion formed in an annular shape along an outer periphery of the central portion and having a thickness larger than a thickness of the central portion, and
the processing target portion includes the outer peripheral portion.
